# EUROPÄISCHE PATENTANMELDUNG

(11) **EP 3 470 179 A1**
(43) Veröffentlichungstag der Anmeldung: **17.04.2019**
(21) Anmeldenummer: 17196389.5
(22) Anmeldetag: 13.10.2017
(51) Int. Cl.: B25J 9/16

(54) **ROBOTER UND VERFAHREN ZUR STEUERUNG EINER ANORDNUNG VON EINEM ERSTEN ROBOTER UND ZUMINDEST EINEM ZWEITEN ROBOTER**

(71) Anmelder: Siemens Aktiengesellschaft, 80333 München (DE)
(72) Erfinder: Neubauer, Werner, 81739 München (DE)

(57) **Zusammenfassung**

Die Erfindung betrifft ein Verfahren zur Steuerung einer Anordnung von einem ersten Roboter und zumindest einem zweiten Roboter, bei dem der erste Roboter durch eine Steuerung gesteuert wird und der zweite Roboter durch eine zweite Steuerung gesteuert wird, bei dem die erste und zweite Steuerung derart ausgestaltet ist, dass während zumindest einer ersten Zeitdauer eines Arbeitsvorgangs derart gekoppelt erfolgt, dass Bewegungen der Roboter aufeinander abgestimmt, insbesondere gleichzeitig, und während zumindest einer zweiten Zeitdauer des Arbeitsvorgangs unabhängig erfolgen. Ferner betrifft die Erfindung einen Roboter mit Mitteln zur Durchführung des Verfahrens.

## Beschreibung

Die Erfindung betrifft ein Verfahren zur Steuerung einer Anordnung von einem ersten Roboter und zumindest einem zweiten Roboter gemäß dem Oberbegriff des Anspruchs 1 sowie einen Roboter gemäß dem Oberbegriff des Anspruchs 9.

Der Einsatz von Robotern zur Durchführung von Arbeiten, insbesondere im Industriellen Umfeld aber auch zunehmend im medizinischen oder häuslichen Bereich ist bekannt.

Insbesondere im industriellen Bereich ist es bekannt, dass für den jeweiligen Einsatz dafür in der Regel die automatisiert auszuführenden Abläufe im Roboter durch eine Programmierung hinterlegt sind. Die Standardmethode Roboter zu programmieren ist heute dabei immer noch die Bewegungen manuell mit der so genannten Teach-in Technik (auch als "Einlernen" oder "Teachen" bekannt), bei der innerhalb von Arbeitszyklen erwünschte Positionen angefahren und deren Koordinaten für die Steuerung abgespeichert werden, sowie die Abläufe fest zu programmieren.

Es ist ferner bekannt, dass in immer mehr Anwendungen Steuerungsparadigmen Einzug halten, bei denen die Abläufe und Bewegungen automatisch generiert werden. Einerseits geschieht das in der Offlineprogrammierumgebung, andererseits auch abhängig von Sensorsignalen online bei der Ausführung der Roboterfunktionen. Die Methoden der Generierung von Abläufen und Bewegung sind dabei entweder Planungssysteme und/oder einfache bis komplex programmierte Fähigkeiten (Skills), die die Robotersysteme steuern, wobei dabei online, also bei der Ausführung, über den Ablauf entschieden wird. Robotersysteme können dabei Basisfähigkeiten bereits ab Werk mitbringen, die dann von einem Systemintegrator verschaltet und parametrisiert werden um die Gesamtfunktionalität zu definieren.

Auf Grund der Tatsache, dass - unter anderem im industriellen Umfeld - mehrere Roboter im Einsatz sind, besteht die Gefahr von Kollisionen. Hierzu ist es bekannt Sensoren einzusetzen, die andere Roboter und oder andere Hindernisse erkennen und ggf. Bewegungen einstellen.

Mit dieser Lösung unterliegt aber ein gemeinsamer Einsatz von Robotern regelmäßig Unterbrechungen.

Die der Erfindung zugrundeliegende Aufgabe ist es daher eine Lösung anzugeben, die die Nachteile des Standes der Technik überwindet.

Diese Aufgabe wird ausgehend von dem Verfahren zur Steuerung einer Anordnung von einem ersten Roboter und zumindest einem zweiten Roboter gemäß dem Oberbegriff des Anspruchs 1, durch dessen kennzeichnenden Merkmale gelöst, sowie durch den Roboter gemäß dem Oberbegriff des Anspruchs 9, durch dessen kennzeichnenden Merkmale gelöst.

Bei dem erfindungsgemäßen Verfahren zur Steuerung einer Anordnung von einem ersten Roboter und zumindest einem zweiten Roboter, bei dem der erste Roboter durch eine Steuerung gesteuert wird und der zweite Roboter durch eine zweite Steuerung gesteuert wird, sind die erste und zweite Steuerung derart ausgestaltet, dass während zumindest einer ersten Zeitdauer eines Arbeitsvorgangs derart gekoppelt erfolgt, dass Bewegungen der Roboter aufeinander abgestimmt, insbesondere gleichzeitig, und während zumindest einer zweiten Zeitdauer des Arbeitsvorgangs unabhängig erfolgen.

Durch das erfindungsgemäße Verfahren wird es möglich mehrere Roboter Tätigkeiten zumindest temporär gleichzeitig vollziehen zu lassen. Für Phasen gleichzeitiger Arbeit entsteht ein gemeinsamer Arbeitsraum, während für die anderen Zeiten die Roboter in unabhängigen Arbeitsräumen agieren können. Hierdurch werden eine höhere Flexibilität und ein effizienterer Einsatz von Robotern möglich. Beispielsweise könnten stationäre Roboter von mobilen Robotern in (Teil-)Arbeitsschritten unterstützt und bei Abschluss dieser Arbeiten auch wieder verlassen werden. Denkbar sind auch sich bildende Arbeitsgruppen rein mobiler Roboter. Aber auch bei stationären Robotergruppen, die bisher stets in unabhängigen Arbeitsräumen agierten und daher keiner gleichzeitigen Arbeit zugänglich waren, kommt die Erfindung zugute.

Vorzugsweise wird das erfindungsgemäße Verfahren dabei derart weitergebildet, dass die erste Steuerung als ein erster Prozess und die zweite Steuerung als ein zweiter Prozess mittels einer zentralen Steuerung durchgeführt wird. Dies stellt eine gut zu implementierende Form des Verfahrens dar, da die Prozesse je nach weiterer Ausgestaltung bzw. Weiterbildung der Verarbeitung durch einen oder mehreren Prozessoren zumindest temporär zugeführt werden kann. Eine weitere Flexibilisierung ergibt sich also somit.

Dabei ist es beispielsweise gemäß einer vorteilhaften Weiterbildung des erfindungsgemäßen Verfahrens denkbar, dass die erste und zweite Steuerung derart miteinander gekoppelt erfolgt, dass die Abstimmung des ersten Prozesses und des zweiten Prozesses durch die zentrale Steuerung erfolgt. Eine zentrale Steuerung entfaltet unter anderem dann einen Vorteil, wenn die Arbeitsabläufe und Pläne vorab für eine zusammenwirkende Mehrzahl von Robotern erfolgt sind und auch später bei notwendigen Anpassungen, beispielsweise im Zuge einer Optimierung, auch nur an einer Stelle erfolgen muss.

Alternativ oder ergänzend von Vorteil ist es, wenn das erfindungsgemäße Verfahren derart weitergebildet wird, dass die erste Steuerung als ein erster Prozess und die zweite Steuerung als ein zweiter Prozess auf dem jeweiligen Roboter durchgeführt wird. Dies erlaubt beispielweise eine größere Unabhängigkeit der Roboter, die insbesondere bei mobilen Robotern gefordert sein könnte.

Bei einer weiteren Ausgestaltung des erfindungsgemäßen Verfahrens erfolg die erste und zweite Steuerung derart miteinander gekoppelt, dass die Abstimmung nach Art des Master-Slave Prinzips durchgeführt wird, wobei der erste Prozess als so genannter "Master und der zweite Prozess sich als so genannter "Slave" betrieben wird. Durch die Schaffung einer derartigen hierarchischen Architektur bzw. Rollenverteilung wird eine klare Aufgabenverteilung erreicht, die unter anderem eine Autonomie der Roboter(-Gruppen) fördert.

Vorzugsweise wird das erfindungsgemäße Verfahren derart weitergebildet, dass im Rahmen der ersten und/oder zweiten Steuerung eine Ablaufplanung und Ablaufsteuerung des Arbeitsvorgangs durchgeführt wird.

Wird die Kopplung durch ein Erfassen des Eindringens des zweiten Roboters in den Wirkkreis des ersten Roboters und/oder des ersten Roboters in den Wirkkreis des zweiten Roboters initiiert, bietet sich ein geeigneter Trigger, um das erfindungsgemäße Verfahren zu starten und in seiner Flexibilität bzgl. der Anzahl und Organisation von an einer (Teil)Aufgabe arbeitenden Robotern unterstützt. Wirkkreis kann hierbei der Raum sein, in dem der Roboter handeln kann und/oder der Raum, in dem eine Kommunikation mit den anderen Robotern, insbesondere drahtlos, möglich ist.

Durch die Weiterbildung des erfindungsgemäßen Verfahrens bei dem der erste Roboter als stationäre Zelle und der zweite Roboter als mobile Einheit betrieben werden, wobei die Kopplung durch ein Andocken des zweiten Roboters an die Roboterzelle des ersten Roboters initiiert wird, ist eine hierzu alternative bzw. ergänzende Ausgestaltung der Erfindung gegeben, die ein sinnvolles Triggern des Kopplung möglich macht.

Der erfindungsgemäße Roboter zeichnet sich durch Mittel zur Durchführung des Verfahrens und/oder der Weiterbildungen des Verfahrens aus und trägt somit zur Verwirklichung der dort genannten Vorteile bei.

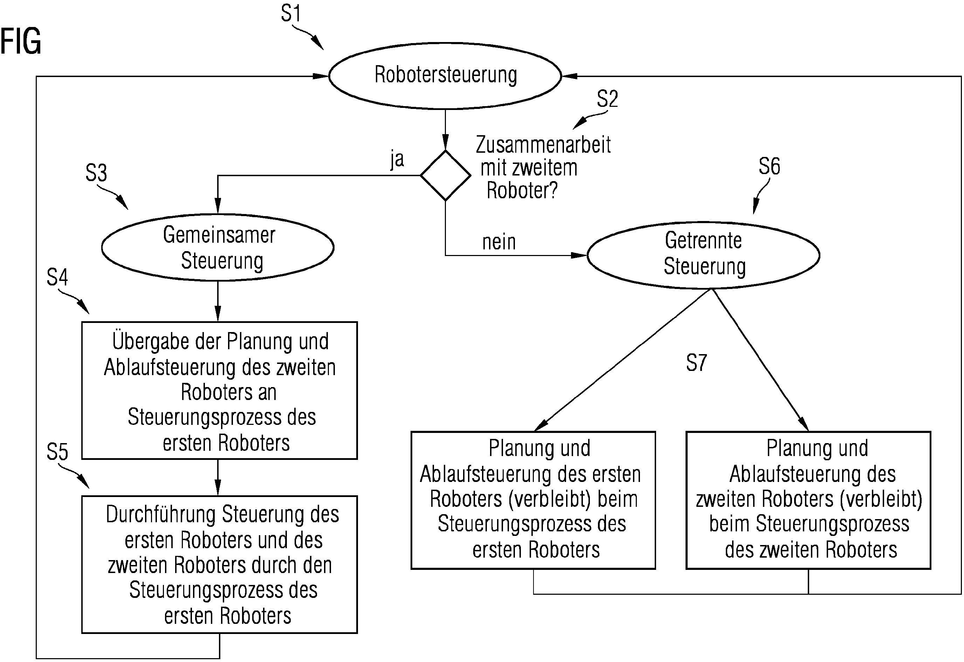

Ausführungsbeispiele und sowie weitere Vorteile der Erfindung werden nachfolgend anhand der einzigen Zeichnung erläutert.

Es zeigt die
- Figur:: Als Ausführungsbeispiel einer erfindungsgemäßen Robotersteuerung schematisch ein Ablaufdiagramm der Verfahrens

In der Figur ist schematisch ein Ablauf eines Ausführungsbeispiels der erfindungsgemäßen Robotersteuerung dargestellt, die von einem als erster Schritt S1 bezeichneten Ausgangszustand "Robotersteuerung" ein Beispiel des erfindungsgemäßen Prinzips bei der Steuerung aufzeigt.

Ein Roboter, auf dem das erfindungsgemäße Verfahren implementiert ist, wird beispielsweise in diesem Zustand auf Triggersignale warten, die seine Tätigkeiten anstoßen.

Dabei erfolgt beispielsweise ausgehend von diesem Grundzustand in einem zweiten Schritt S2 eine Auswertung dahingehend, dass ermittelt wird, ob das Triggersignal auf eine Kooperation mit einem oder mehreren weiteren Robotern hindeutet, wobei hierzu eine Kommunikationsschnittstelle erforderlich ist, deren Ausgestaltung wahlfrei je nach erwünschtem Design der Roboter, insbesondere gemäß gängigen Kommunikationsstandards, gebildet werden kann.

Ergibt die Auswertung des zweiten Schrittes S2, dass mit einem zweiten Roboter, zumindest ab diesem Zeitpunkt, beispielsweise für eine begrenzte Zeit, kooperiert wird, wechselt die Robotersteuerung gemäß des Ausführungsbeispiels in einem dritten Schrittes S3 in einen Zustand "Gemeinsame Steuerung".

Dieser Zustand kann gemäß dem Beispiel durch zumindest einem vierten Schritt S4 gekennzeichnet sein, in dem die Planung der Arbeitsschritte und die Steuerung des zweiten Roboters, beispielsweise abgewickelt über die gängige Kommunikationsschnittstelle, an die Steuerung, d.h. den Steuerungsprozess, des ersten Roboters übergeben wird, so dass dieser in einem fünften Schritt S5 die Planung und Steuerung für beide Roboter übernimmt, so dass gemäß dem Master-Slave Prinzip eine Verteilung derart realisiert wird, dass der erste Roboter bzw. sein Steuerungsprozess der Master bzw. Masterprozess ist, während der zweite Roboter bzw. sein Steuerungsprozess die Rolle eines Slave bzw. Slave-Prozesses einnimmt. Die Aufteilung der Rollen kann dabei als Weiterbildung durch entsprechende Implementierung fest vorgegeben oder adaptiv je nach auftretender Aktivität bzw. auftretendem (Teil)Prozess der durchzuführenden Arbeit erfolgen.

Nach dieser Übergabe befinden sich die Roboter in dem Zustand des ersten Schrittes S1 in dem nun die Steuerung der gemeinsamen Arbeit zweier oder mehrerer Roboter gemäß dem Beispiel so lange erfolgt bis ein weiteres Triggersignal im zweiten Schritt S2 eine Änderung von einer gemeinsamen Arbeit hin zu der Arbeit des ersten Roboters alleine ändert.

Tritt so ein Triggersignal auf, wird das erfindungsgemäße Verfahren derart fortgesetzt, dass die Steuerung in einem sechsten Schritt S6 in einen Zustand "Getrennte Steuerung" wechselt.

Dieser Zustand ist zumindest durch einen siebten Schritt S7 gekennzeichnet, in dem die Steuerung des ersten Roboters allein durch den Steuerungsprozess des ersten Roboters durchgeführt wird und in dem parallel der Steuerungsprozess eines zweiten oder weiterer Roboter jeweils bei den Steuerungsprozessen dieser Roboter verbleiben.

Vorteile, weitere Details sowie Ausgestaltungsvarianten des Ausführungsbeispiels bzw. der Erfindung stellen sich wie folgt dar:
Durch die Erfindung können mehrere Robotersysteme kooperativ zusammenarbeiten, so dass deren Fähigkeiten kombiniert werden können. Dabei stellt die Erfindung auch sicher, dass die Einzelsysteme zeitweise auch einzeln agieren können. Hierdurch wird der Einsatz von Robotern, insbesondere im industriellen Umfeld, effektiver gestaltet. Es führt auch zu einem verbesserten Fluss der durchgeführten Arbeiten bzw. der Bewegungen der Roboter.

Erfindungsgemäß werden dazu beispielweise verschiedene Arbeitsräume definiert, in denen sich nur jeweils ein Roboter bewegen darf. Die abwechselnde Freigabe der Bewegungen bzw. durchgeführten Arbeiten erfolgt über einen übergeordneten Steuerungsrechner.

Es ist leicht zu erkennen, dass bei einer kooperativen Aufgabe, wie beispielsweise für zwei Roboter, wie zum Beispiel bei der zweiarmigen Montage eines Bauteils, die Ausführung deutlich effizienter ist, wenn sich beide Roboterarme erfindungsgemäß, zumindest zeitweise, gleichzeitig im selben Arbeitsraum bewegen dürfen.

Die Erfindung trägt der Tatsache Rechnung, dass für manche Anwendungen dies sogar erforderlich sein kann. Damit die Koordination gewährleistet bleibt und es zu keinen Kollisionen kommt, werden gemäß Ausführungsformen der Erfindung die Abläufe und Bewegungen gemeinsam geplant bzw. gemeinsam synchron gesteuert. Dazu werden durch die Implementierung der Erfindung, die beteiligten Roboter derart funktional und ggf. auch strukturell miteinander verbunden und betrieben, dass die Roboter als ein System betrachtet werden können, deren zustandsraum aus der Vereinigungsmenge der Zustandsräume beider Roboter besteht.

Erfindungsgemäß wechseln die Planung und die Steuerung der beiden Robotersysteme je nachdem ob die Robotersysteme eng in einem Arbeitsraum zusammenarbeiten oder unabhängig voneinander in verschiedenen Arbeitsbereichen arbeiten zwischen zwei Modi:
1) Zwei getrennte Steuerungen, mit getrennten Planern und getrennter Ablaufsteuerung
2) Eine gemeinsame Steuerung, mit einem Planer und einer Ablaufsteuerung

Die gemeinsame Steuerung kann dabei als virtuell betrachtet werden. Dass heißt wo im zweiten Fall die Planung gerechnet wird, kann je nach Ausführungsbeispiel beliebig bestimmt werden.

Beispielswiese wird entweder alles auf einer Steuerung gerechnet und die Ausführung des anderen Robotersystems werden wie im dargestellten Ausführungsbeispiel der Fall, dann im Master-Slave-Prinzip durchgeführt, oder die beiden Steuerungen, teilen sich die gemeinsame Aufgabe.

Auf vorteilhafte Weise kann diese Umschaltung zwischen den beiden Modi temporär jeder Zeit während der Ausführung einer Aufgabe erfolgen. Vorteilhafter Weise kann das derart realisiert sein, dass die Gesamtaufgabe in einzelne zeitliche Abschnitte unterteilt wird, in denen eine Teilaufgabe gemeinsam oder unabhängig voneinander durchgeführt wird.

Beispielhaft kann ein mobiler Roboter, der an einer stationären Roboterzelle andockt, erfindungsgemäß für die Zeit der Interaktion von einer gemeinsamen virtuellen Steuerung geplant und gesteuert werden. Über das Andocken kann beispielsweise auch die notwendige Kommunikationsschnittstelle, beispielsweise drahtgebunden, bereitgestellt werden. Drahtlose Anbindung und somit Kommunikation ist aber auch im Rahmen der Ausgestaltungen möglich.

Die Erfindung macht das Zusammenarbeiten zweier oder mehrerer Roboter deutlich effizienter, da sich beide Bewegungen gleichzeitig im selben Arbeitsraum planen lassen. Insbesondere mobile Roboter werden durch die Erfindung um weitere Einsatzmöglichkeiten bzw. -arten bereichert, da sie durch die Erfindung temporär miteinander oder mit einer stationären Roboterzelle effizient zusammenarbeiten können. Die Komplexität, die durch die Synchronisation und das Zusammenwirken von zwei unabhängig voneinander arbeitenden Steuerungen ergibt, kann durch die Erfindung vermieden werden.

Die alternierenden Modi der gemeinsamen Planung und Steuerung erlaubt nicht nur die gemeinsamen Bewegungen optimal durchzuführen, auch die getrennten Aufgaben werden dann unabhängig voneinander optimal ausgeführt.

Die Erfindung stillt auch den Bedarf, der sich durch den verstärkten Einsatz von Sensorik und die daraus resultierende Notwendigkeit die Abläufe und Bewegungen online zu planen und auszuführen, ergibt.

Ein mögliches Einsatzgebiet mobiler Roboter wäre insbesondere beim Materialtransport gegeben, wo sie durch die Erfindung auch mit stationären Robotersystemen interagieren können und sich auch dynamisch zu kooperativen Aufgaben zusammenfinden können.

Die Erfindung hebt sich auch positiv von einer Blockabfertigung, bei der bestimmte Arbeitsräume nur für jeweils einen Roboter freigegeben sind, ab da diese ebenso wie die Kollisionsvermeidung den Arbeitsfluss durch zumindest temporär hemmt. Eine effiziente Lösung der Automatisierungsaufgabe, wie sie die Erfindung ermöglicht, ist dabei nicht möglich.

Die Erfindung ist nicht auf die gezeigten bzw. diskutierten Ausführungsbeispiele beschränkt. Vielmehr umfasst es alle durch die Ansprüche definierten Ausgestaltungen.

## Patentansprüche

1. Verfahren zur Steuerung einer Anordnung von einem ersten Roboter und zumindest einem zweiten Roboter, bei dem der erste Roboter durch eine Steuerung gesteuert wird und der zweite Roboter durch eine zweite Steuerung gesteuert wird, **dadurch gekennzeichnet, dass** die erste und zweite Steuerung derart ausgestaltet sind, dass während zumindest einer ersten Zeitdauer eines Arbeitsvorgangs derart gekoppelt erfolgt, dass Bewegungen der Roboter aufeinander abgestimmt, insbesondere gleichzeitig, und während zumindest einer zweiten Zeitdauer des Arbeitsvorgangs unabhängig erfolgen.

2. Verfahren nach dem vorhergehenden Anspruch, **dadurch gekennzeichnet, dass** die erste Steuerung als ein erster Prozess und die zweite Steuerung als ein zweiter Prozess mittels einer zentralen Steuerung durchgeführt wird.

3. Verfahren nach dem vorhergehenden Anspruch, **dadurch gekennzeichnet, dass** die erste und zweite Steuerung derart miteinander gekoppelt erfolgt, dass die Abstimmung des ersten Prozesses und des zweiten Prozesses durch die zentrale Steuerung erfolgt.

4. Verfahren nach Anspruch 1, **dadurch gekennzeichnet, dass** die erste Steuerung als ein erster Prozess und die zweite Steuerung als ein zweiter Prozess auf dem jeweiligen Roboter durchgeführt wird.

5. Verfahren nach dem vorhergehenden Anspruch, **dadurch gekennzeichnet, dass** die erste und zweite Steuerung derart miteinander gekoppelt erfolgt, dass die Abstimmung nach Art des Master-Slave Prinzips durchgeführt wird, wobei der erste Prozess als so genannter "Master und der zweite Prozess sich als so genannter "Slave" betrieben wird.

6. Verfahren nach einem der vorhergehenden Ansprüche, **dadurch gekennzeichnet, dass** im Rahmen der ersten und/oder zweiten Steuerung Ablaufplanung und Ablaufsteuerung des Arbeitsvorgangs durchgeführt wird.

7. Verfahren nach einem der vorhergehenden Ansprüche, **dadurch gekennzeichnet, dass** die Kopplung durch ein Erfassen des Eindringens des zweiten Roboters in den Wirkkreis des ersten Roboters und/oder des ersten Roboters in den Wirkkreis des zweiten Roboters initiiert wird.

8. Verfahren nach dem vorhergehenden Anspruch, **dadurch gekennzeichnet, dass** der erste Roboter als stationäre Zelle und der zweite Roboter als mobile Einheit betrieben werden, wobei die Kopplung durch ein Andocken des zweiten Roboters an die Roboterzelle des ersten Roboters initiiert wird.

9. Roboter, **gekennzeichnet durch** Mittel zur Durchführung des Verfahrens nach einem der vorhergehenden Ansprüche.
